# EUROPEAN PATENT SPECIFICATION

(11) **EP 2 272 753 B1**
(45) Date of publication and mention of the grant of the patent: **27.02.2013**
(21) Application number: 09164669.5
(22) Date of filing: 06.07.2009
(51) Int. Cl.: B64C 23/00, F15D 1/12

(54) **Gas flow control device**
Gasflusssteuerungsvorrichtung
Dispositif de contrôle de débit de gaz

(43) Date of publication of application: 12.01.2011
(73) Proprietor: EADS Deutschland GmbH, 85521 Ottobrunn (DE)
(72) Inventor: Bolzmacher, Christian, 82402, Seeshaupt (DE); Nikolovski, Jean-Pierre, 92290, Chatenay-Malabry (FR); Hafez, Moustapha, 94110, Arcueil (FR); Bauer, Karin, 82041, Oberhaching (DE)
(74) Representative: Rasch, Michael

(56) References cited:
- EP-A2- 0 315 806
- WO-A2-2009/124913
- DE-A1-102005 052 930
- US-A- 5 894 990
- C. BOLZMACHER, X. RIEDL, R. WAGNER, W. KUPKE, K. BAUER: "Miniaturized Actuators for High-Speed Flow Control Applications" PROCEEDINGS FROM THE KATNET II CONFERENCE ON "KEY AERODYNAMIC TECHNILOGIES", 29 June 2009 (2009-06-29), XP002556563
- "PIEZOELECTRIC MICROACTUATOR WITH MECHANICALLY AMPLIFIED LEVERAGE UNIT" PROCEEDINGS FROM EUROSENSORS XXII, 7 September 2008 (2008-09-07), - 10 September 2008 (2008-09-10) XP008115039 DRESDEN

## Description

The invention relates to a Gas flow control device for controlling certain gas flow characteristics of a gas flow along a surface, by piezoceramic actuators for high frequency actuation of said air flow.

For active flow control applications, for example at the leading edge of aircraft wings so as to extend the range with laminar air flow, robust actuators with high amplitudes in the range of 50 µm at relatively high frequencies between 1 and 30 kHz and low overall power consumption would be required. Using piezoceramic elements which are able to provide the required frequency range, the low strain output has to be amplified as the amplitude of piezo crystals is around 0.1% of the crystal thickness. Without amplification the piezo crystal would have to have a thickness of around 5 cm. Many techniques have been proposed to increase the amplitudes including lever-type mechanisms. Most leverage units are complicated in design making its manufacturing expensive. Document EP0315806 shows such an actuator and is considered to be the closest prior art.

It is therefore object of the present invention to provide a simple structure but efficient Gas flow control device.

This object is met by the invention as set out in claim 1. The invention is based upon the fact that as the membrane which is attached to a piezoceramic element for excitation has a variable thickness and acts as a wave guide for lamb waves which can be focused and its velocity can be varied. The thickness of said membrane increases from its central, region towards its edge exponentially with respect to the radial distance. This results in a different mode shape that might be advantageous for many applications. The Eigen mode for said embodiment is broader compared to the linear one.

During the wave propagation from the thickest part of the membrane where the piezoceramic element is situated towards the thinner part the wave propagation velocity drops but the displacement amplitude increases. In nature, such an effect can be observed while a tsunami is approaching the coast line. More precisely, if the thick part of the membrane is bent by the piezoceramic element, most of the energy is transferred to the membrane. The potential energy that results from displacing the membrane from its rest position is then transferred to the horizontal propagation of the wave. The speed at which the wave travels increases with the square root of the membrane thickness. Therefore, the wave travels faster in the thick membrane parts than in the thinner parts. As the thickness of the membrane decreases in the wave propagation direction, the wave amplitude inceases but the wavelength decreases at the same time increasing its amplitude. This is caused by the fact that the group velocity, which is also the wave energy transport velocity, changes with membrane thickness. For waves, the energy flux associated with the wave motion, which is the product of the wave energy density with the group velocity between two wave rays is a conserved quantity. As a result, the membrane thickness changes resulting in energy density variations. And the wave energy is proportional to the amplitude squared.

Thus, by the arrangement of the invention, piezoceramic excitation means of small thickness can be used for creating a wave excitation of considerably higher amplitude which is suitable for active flow control applications.

In the central region the thickness is smallest and may be in the range of 1 to 1000 µm for most applications. In the case of a circular actuator and membrane this means that the thickness increases proportional to the radial distance from the center. Preferably, outward of a certain position where the piezoceramic excitation means are arranged the membrane thickness remains constant.

In case of a rectangular membrane the membrane thickness increases proportional to the lateral extension. In this case the membrane thickness varies only in one direction while it is constant in the transverse direction. This linear increase of thickness is used when a line source is required instead of a point source as provided by circular membranes.

Preferably the outer face of said membrane adjacent said gas flow is plane which means that the change of membrane thickness results in a conical shape of the opposing (inner) membrane face.

According to a further preferred embodiment of the invention each said excitation means comprises two piezoceramic excitation devices arranged on opposite faces of said membrane. This provides a more uniform wave excitation than in case of only one excitation device is provided on one side of the membrane.

According to a further preferred embodiment of the invention at least one of said excitation devices includes sensing means for sensing the membrane oscillation. This sensing means provides a feedback for the excitation control.

According to a further preferred embodiment of the invention each said actuator comprises a circular membrane. This arrangement is easy to produce and allows a high amplification of the generated waves. Preferably the actuator comprises at least one ring-shaped piezoceramic excitation device arranged at the membrane edge. Thus, a circular excitation of the membrane is achieved.

According to a further preferred embodiment of the invention said circular (i.e. disc-shaped) membrane comprises a number of radial slits dividing said membrane into a number of circular-sector shaped membrane-beams. This embodiment results in an increased amplitude as the membrane-beams are each fixed only at one end.

According to an alternative embodiment of the invention the actuator comprises a rectangular membrane. This arrangement allows to provide elongated actuators which may provide evenly distributed actuation of the air flow. In this case preferably two longitudinal excitation means arranged along opposing edges of said membrane.

According to a further preferred embodiment of the invention each said actuator comprises an individual actuator control means. Normally a number of actuators will be arranged in an array or line. This embodiment allows an individual excitation of the air flow based on the specific conditions present at the site of this actuator. In connection with sensing means provided in the actuator an efficient gas flow control can be achieved. Preferably, the actuator control means controls said membrane to be excited at its resonance frequency and/or harmonics thereof in order to achieve maximum amplitude of membrane vibration. According to a further embodiment the actuator control means of neighboring actuators are interconnected for superpositioning their respective actuating effects. This embodiment has the positive effect that waves from neighboring actuators can be used to further amplify the amplitude of another actuator.

According to a further preferred embodiment of the invention a plurality of actuators are arranged in a row or array. By this larger surfaces can be provided with flow control means. For example, in an application for the air flow control at an aircraft wing, an array of many actuators would be arranged along the aircraft wing parallel to its leading edge in the area where the laminar air flow turns turbulent. Thus by the invention the point of laminar-turbulent transition can be moved further downstream reducing the drag of the aircraft. According to a further preferred embodiment of the invention the actuators are arranged in an array with a number of rows and columns of actuators, a set of first connecting lines associated which each row of actuators connect the piezoceramic excitation means of each said actuator in said row and a set of second connecting lines associated which each column connect each said actuator in said column. This provides a simple but efficient possibility of individual control of each actuator without the necessity to provide individual control lines to each actuator.

According to a further preferred embodiment of the invention a rectangular continuous membrane is provided and the actuators are arranged in an array with a number of rows and columns of actuators on said membrane, a number of piezoceramic excitation means being arranged along the edges of said rectangular membrane and each being in the line of extension of one of said rows or columns and being individually addressable. The membrane or plate thus simply comprises a number of preferably circular structured areas which each may act as an individual acoustic amplification mechanism. By addressing certain piezoceramic excitation means a superposition of artificially generated waves is achieved which results in a locally restricted area which can be actuated by means of constructive and destructive effects on the interacting waves. This embodiment has the advantage that any combination of actuators is individually addressable without wiring directly to the actuators.

According to a further preferred embodiment of the invention a zero net mass flow jet transducer is proposed comprising a cavity with an orifice, said actuator having a circular membrane as proposed in claim 1 with a central opening covering said cavity. Such a transducer can be efficiently used to convert a turbulent air flow back into a laminar flow. This may allow the reduction of skin friction and the reduction in size or the omission of flaps on aircraft wings. The Helmholz resonance that is used to create very high jet velocities can be tuned by varying the chamber size underlying the acoustically optimized membrane.

As has already been stated, a preferred embodiment for using the invention is in boundary layer control of airfoils, most preferably of aircraft wings. The invention allows the reduction of drag induced by turbulent air flow along the airfoil. The gas flow characteristics to be controlled is thus the boundary layer transition of said gas flow and/or the flow vortex. Especially, the integration of microactuation for incruise applications on real airfoils structures becomes feasible. Transition control and active control of micro-coherent flow structures in the turbulent boundary layer with the aim of drag reduction requires high frequencies of up to 30 kHz and a very close spacing of very small actuated areas (less than 1 mm). With the invention it becomes feasible to remotely control such small actuation areas of less than 1 mm on comparatively large surfaces and in the required frequency and space regions.

Other applications such as active wave and sound cancellation applications are possible. Quite similar requirements can be found in human-machine interaction with tactile and acoustic feedback as another application for this technology. The actuators and plates can be formed in almost any shape and the actuation principle is not limited to flat plates. This enables such a system to be integrated in complex 3D forms or being a complex 3D form itself.

Other aspects, aims and advantages of the present invention will become more apparent on reading the following detailed description of the preferred embodiments of the invention given by way on non-limiting example with reference to the accompanying drawings, in which
- Fig. 1:: is a cross-sectional view of three disk-shaped actuators;
- Fig. 2:: is a top view of any of the embodiments shown in Fig. 1;
- Fig. 3:: is a top view of an alternative embodiment for a disk-shaped actuator with slotted membrane;
- Fig. 4:: is a perspective view of an embodiment of a rectangular actuator;
- Fig. 5:: is a cross-sectional view the embodiment of Fig. 4;
- Fig. 6:: is a perspective view of a first embodiment of an array of actuators;
- Fig. 7:: is a perspective view of a second embodiment of an array of actuators;
- Fig. 8:: is a perspective view of a pattern of excited actuators according to the arrangement of Fig. 6 or 7.
- Fig. 9:: is a cross-sectional view of a jet actuator;
- Fig. 10:: is a perspective view of a jet actuator similar to that of Fig. 9.

Identical and similar items in more than one figure are, as far as possible, identified by the same reference symbols.

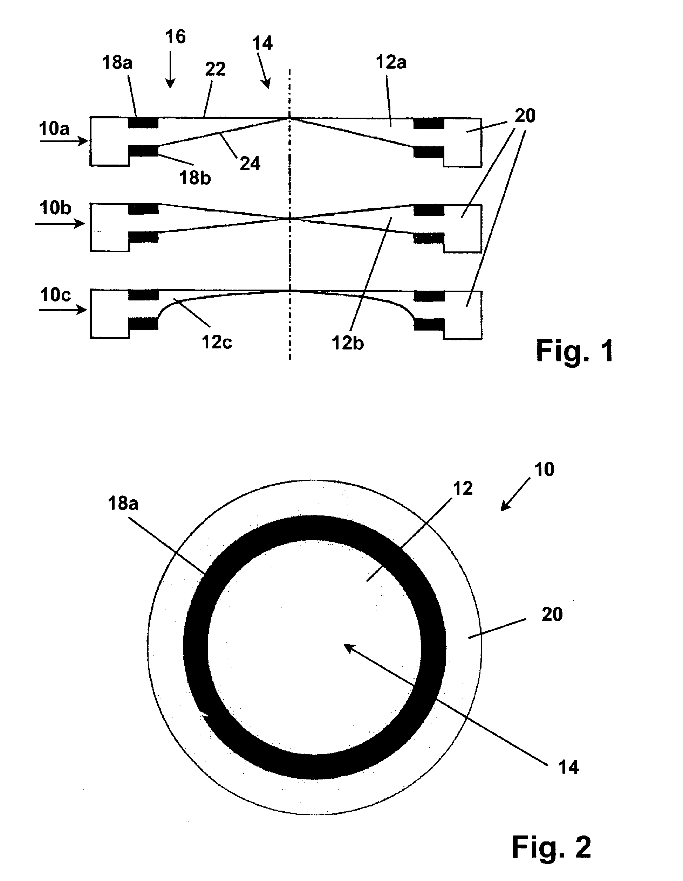

Now taking reference to Fig.1 and Fig. 2, three embodiments of an actuator **10a, 10b,** 10c according to claimed and not claimed embodiments of the invention each comprise a disk-shaped membrane **12a, 12b, 12c** which has continuously changing thickness. More specifically, the membranes **12** of all actuator **10a, 10b, 10c** have the smallest thickness in the membrane center **14** from which the thickness increases in radial direction up to an edge or a radial point **16** where circular piezoceramic excitation devices **18a** and **18b** are arranged on both faces of the membrane **12a, 12b, 12c.** The membrane **12a, 12b, 12c** each has a constant thickness in the area where the excitation devices **18a** and **18b** are situated. Radially outside of the excitation devices **18a** and **18b** is a further circular supporting structure **20** for supporting the membranes **10** in the surrounding structure (not shown).

The top not claimed embodiment in Fig. 1 is an actuator **10a** where the thickness of the membrane **12a** varies linearly with respect to radial distance from the center **14.** It should be appreciated that this change of thickness need not start directly in the center **14** but a small radial distance apart therefrom. Furthermore, the actuator **10a** has a plane top face **22** while the bottom face **24** is basically conical.

The middle not claimed embodiment in Fig. 1 is an actuator **10b** with a membrane **12b** which also has the thickness varying linearly with respect to radial distance from the center **14** but both faces are conical in shape.

The bottom embodiment according to claim 1 in Fig. 1 is an actuator **10c** with a membrane **12c** which has the thickness increasing exponentially with respect to the radial distance from the center **14.**

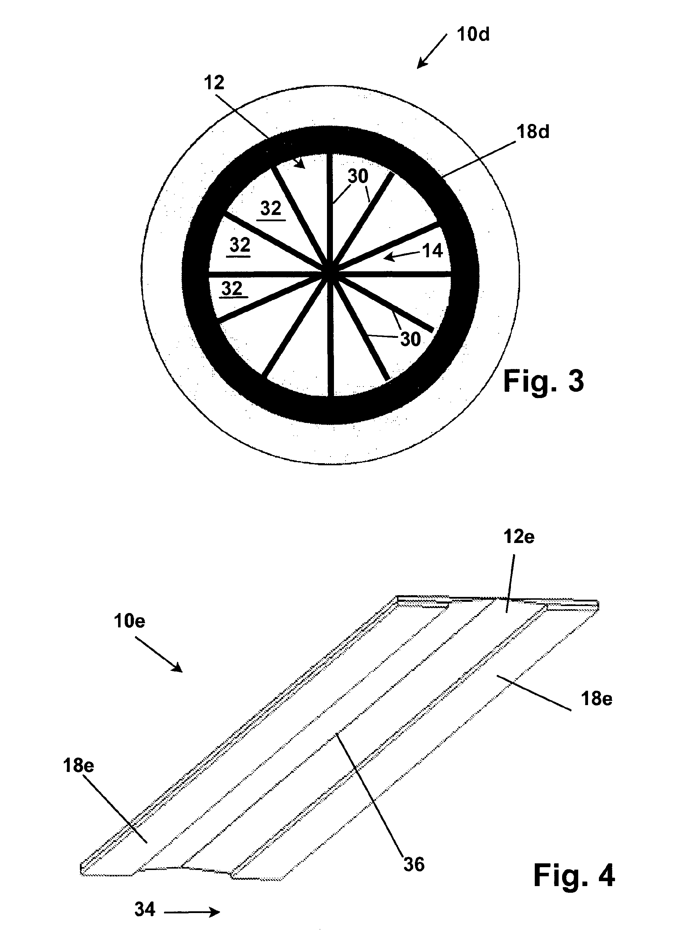

Now taking reference to Fig.3, there is shown an actuator **10d** having the membrane **12** comprising a number of radial slots **30** thus forming a number of circular-sector shaped membrane-beams **32** which are fixed only close to the excitation device **18d** thus allowing a larger amplitude of the membrane-beams **32** near the center **14.** The membrane-beams 32 shown has the cross-section of the membrane **12c** shown in Fig. 1.

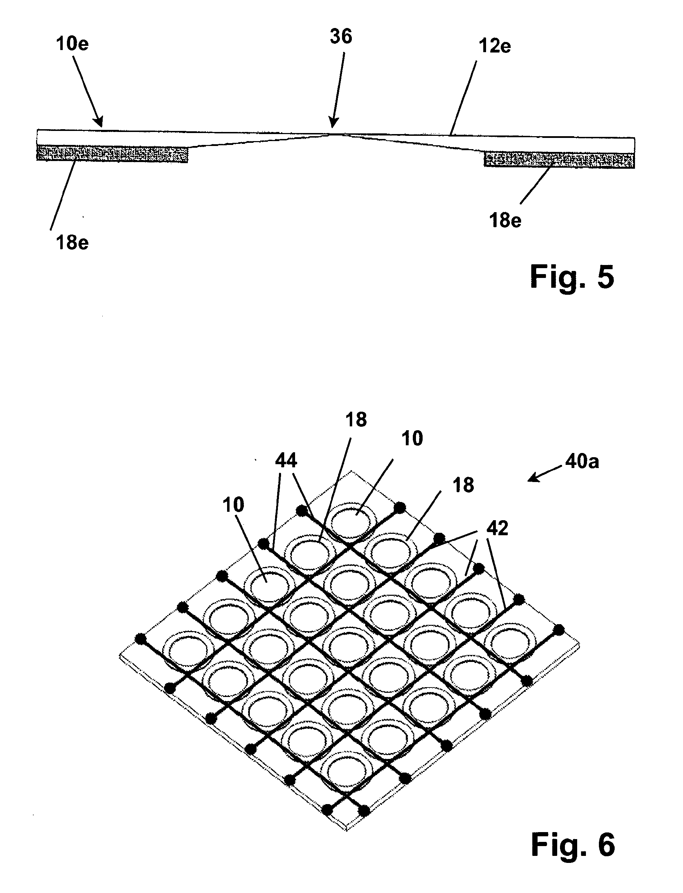

Now taking reference to Fig.4 and Fig. 5, a not claimed embodiment of an actuator **10e** is shown which has a rectangular shape. The cross-section of the membrane **12e** in the lateral direction **34** - similar to the top embodiment in Fig. 1 - has the thickness of the membrane **12e** varying linearly with respect to distance from the middle **36.** In this embodiment, piezoceramic excitation devices **18e** are provided on one side of the membrane **12e** only. However, alternatively, this rectangular embodiment **10e** may also be provided with excitation devices on both sides of membrane **12e** similar to the embodiments shown in Fig. 1.

Fig. 6 shows a perspective view of an array **40a** of disk-shaped actuators **10** each comprising circular piezoceramic excitation devices **18.** Each said excitation device **18** is electrically coupled to one of a first set of connecting wires **42** and a second set of connecting wires **44.** Thus, by addressing the specific first wire **42** and second wire **44** a certain one of the actuators **10** can be addressed.

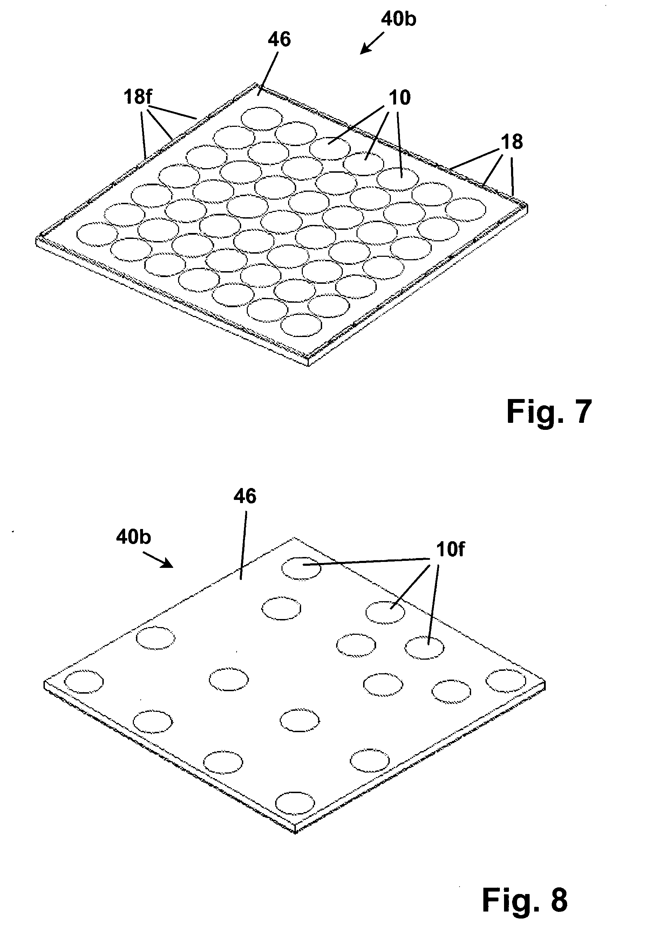

Fig. 7 shows a perspective view of an array **40b** of disk-shaped actuators **10** which are all integral part of a preferably rectangular continuous membrane plane **46.** Along the outer edges of this membrane plane **46** are arranged a plurality of excitation devices **18f.** In this embodiment the excitation of a certain actuator **10** is achieved by addressing certain ones of these excitation devices **18f** which thus produce waves which are superposed to form a maximum at the required actuator **10.** In this case not only the frequency and amplitude but also the phase of the waves generated by the excitation devices **18f** must be controlled in accordance with the position of the specific actuator **10** within the array **40b.** The advantage of this embodiment is that no individual wiring to each actuator **10** is required while the control device is more complex than that of the embodiment shown in Fig. 6.

Fig. 8 is a perspective view of a pattern of excited actuators according to the arrangement of Fig. 6 or **7** when only certain actuator **10f** are excited.

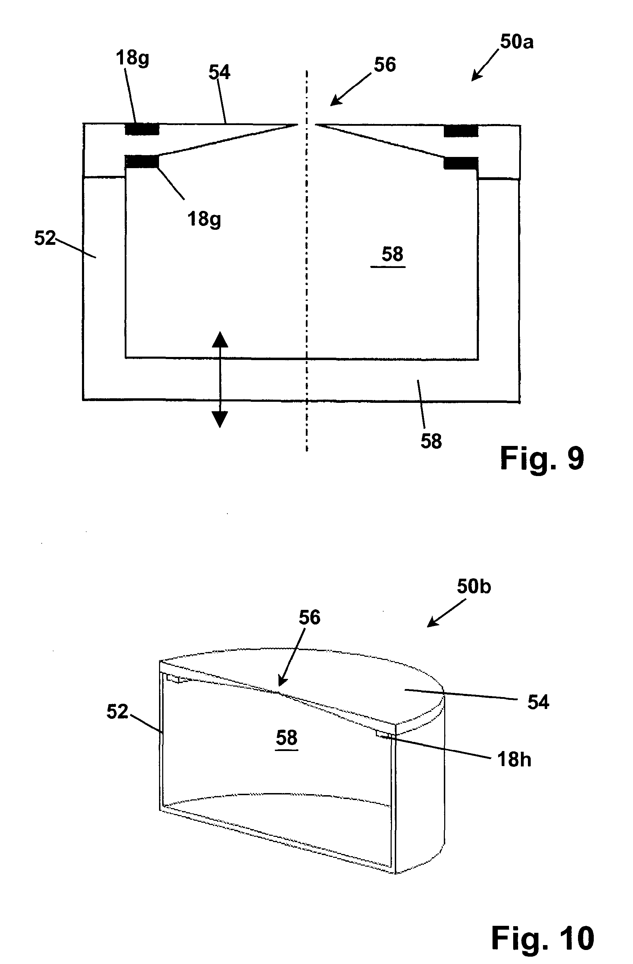

Fig. 9 and 10 show jet actuators **50a, 50b** in cross-sectional and perspective views comprising a basically cylindrical housing **52** which is covered by a membrane **54** which has a small orifice **56** in the center. The membrane **54** preferably has plane outer face such as shown at **12a** and **12c** in Fig. 1. The actuators **50a** of Fig. 9 has two circular excitation devices **18g** on both sides of the membrane **54** while the embodiment of Fig. 10 has only one circular excitation devices **18h** on the membrane **54** within the cavity **58** defined by said housing **52** and membrane **54.** In this embodiment by exciting the membrane **54** a pulsating air flow is generated due to the presence of air within the cavity **58** which is periodically expelled and sucked in through the orifice **56** in the frequency of membrane **54** vibration. The flat membrane shape on top is exposed to the free air velocity whereas the bottom side of the membrane **54** has a conical shape to implement the acoustic effect. The embodiment shown in Fig. 9 has a movable bottom **58** which allows a variation of the size of cavity **58** and thus an adaptation of the cavity **58** to fit the appropriate vibration frequency of membrane **54.**

## Claims

1. Gas flow control device for controlling certain gas flow characteristics of a gas flow along a surface, by piezoceramic actuators (10) for high frequency actuation of said air flow, wherein at least one actuator (10) is arranged in said surface comprising a membrane (12) and at least one piezoceramic excitation means (18) for exciting said membrane at a membrane edge, wherein said membrane (12) has a variable thickness which is thickest close to the membrane edge (16)and thinnest in its central region (14), **characterized in that** the thickness of said membrane from its central region (14) towards its edge (16) increases exponentially with respect to the radial distance.

2. Gas flow control device of claim 1, wherein the outer face (22) of said membrane (12a) adjacent said gas flow is plane.

3. Gas flow control device of claim 1, wherein each said excitation means comprises two piezoceramic excitation devices (18a, 18b) arranged on opposite faces of said membrane (12).

4. Gas flow control device of claim 3, wherein at least one of said excitation devices (18) includes sensing means for sensing the membrane oscillation.

5. Gas flow control device of claim 1, wherein each said actuator (10) comprises a circular membrane (12).

6. Gas flow control device of claim 5, wherein said actuator comprises at least one ring-shaped piezoceramic excitation device (18a, 18b) arranged at the membrane edge (16).

7. Gas flow control device of claim 5 wherein said circular membrane comprises a number of radial slits (30) dividing said membrane (12) into a number of circular-sector shaped membrane-beams (32).

8. Gas flow control device of claim 1, wherein said actuator (10e) comprises a rectangular membrane (12e).

9. Gas flow control device of claim 8, wherein said actuator comprises two longitudinal excitation means (18e) arranged along opposing edges of said membrane (12e).

10. Gas flow control device of any of the preceding claims, wherein each said actuator (10) comprises an individual actuator control means.

11. Gas flow control device of claim 10, wherein said actuator control means controls said membrane to be excited at its resonance frequency and/or harmonics thereof.

12. Gas flow control device of claim 11, wherein the actuator control means of neighboring actuators (10) are interconnected for superpositioning their respective actuating effects.

13. Gas flow control device of any of the preceding claims, wherein a plurality of actuators (10) are arranged in a row or array.

14. Gas flow control device of claim 13, wherein said actuators are arranged in an array (40a) with a number of rows and columns of actuators, a set of first connecting lines (42) associated which each row of actuators connect the piezoceramic excitation means (18) of each said actuator in said row and a set of second connecting lines (44) associated which each column connect each said actuator (10) in said column.

15. Gas flow control device of claim 13, wherein a rectangular continuous membrane (46) is provided and said actuators (10) are arranged in an array with a number of rows and columns of actuators on said membrane, a number of piezoceramic excitation means (18f) being arranged along the edges of said rectangular membrane (46) and each being in the line of extension of one of said rows or columns and being individually addressable.

16. Gas flow control device of claim 1, comprising at least zero net mass flow jet transducer, said jet transducer comprising a cavity (58) with an orifice (56), said actuator (50a) having a circular membrane (54) with a central opening (56) covering said cavity (58).

17. Gas flow control device of claim 16, comprising means for varying the chamber size of said cavity (58).

18. Gas flow control device of any of the preceding claims, wherein said surface is part of an airfoil.

19. Gas flow control device of claim 18, wherein said airfoil is part of an aircraft wing.

20. Gas flow control device of claim 19, wherein the gas flow characteristics to be controlled is the boundary layer transition of said gas flow.

21. Gas flow control device of claim 19, wherein the gas flow characteristics to be controlled is the flow vortex.

## Patentansprüche

1. Gasflusssteuerungsvorrichtung zum Steuern bestimmter Gasflusseigenschaften eines Gasflusses entlang einer Oberfläche durch piezokeramische Stellorgane (10) für eine Hochfrequenzerregung des Luftflusses, wobei mindestens ein Stellorgan (10) in der Oberfläche angeordnet ist, welche eine Membran (12) und mindestens ein piezokeramisches Erregungsmittel (18) zum Erregen der Membran an einem Membranrand umfasst, wobei die Membran (12) eine variable Dicke aufweist, welche nahe an dem Membranrand (16) am dicksten ist und in ihrem zentralen Bereich (14) am dünnsten ist, **dadurch gekennzeichnet, dass** sich die Dicke der Membran von ihrem zentralen Bereich (14) in Richtung auf ihren Rand (16) exponentiell hinsichtlich des radialen Abstands erhöht.

2. Gasflusssteuerungsvorrichtung nach Anspruch 1, wobei die Außenseite (22) der Membran (12a) benachbart zu dem Gasfluss eben ist.

3. Gasflusssteuerungsvorrichtung nach Anspruch 1, wobei jedes Erregungsmittel zwei piezokeramische Erregungsvorrichtungen (18a, 18b) umfasst, welche auf gegenüberliegenden Seiten der Membran (12) angeordnet sind.

4. Gasflusssteuerungsvorrichtung nach Anspruch 3, wobei mindestens eine der Erregungsvorrichtungen (18) Abtastmittel zum Abtasten der Membranschwingung aufweist.

5. Gasflusssteuerungsvorrichtung nach Anspruch 1, wobei jedes Stellorgan (10) eine kreisförmige Membran (12) umfasst.

6. Gasflusssteuerungsvorrichtung nach Anspruch 5, wobei das Stellorgan mindestens eine ringförmige piezokeramische Erregungsvorrichtung (18a, 18b) umfasst, welche an dem Membranrand (16) angeordnet ist.

7. Gasflusssteuerungsvorrichtung nach Anspruch 5, wobei die kreisförmige Membran eine Anzahl radialer Schlitze (30) umfasst, welche die Membran (12) in eine Anzahl kreissektorförmiger Membranstrahlen (32) unterteilen.

8. Gasflusssteuerungsvorrichtung nach Anspruch 1, wobei das Stellorgan (10e) eine rechteckige Membran (12e) umfasst.

9. Gasflusssteuerungsvorrichtung nach Anspruch 8, wobei das Stellorgan zwei longitudinale Erregungsmittel (18e) umfasst, welche entlang gegenüberliegender Ränder der Membran (12e) angeordnet sind.

10. Gasflusssteuerungsvorrichtung nach einem der vorhergehenden Ansprüche, wobei jedes Stellorgan (10) ein individuelles Stellorgan-Steuerungsmittel umfasst.

11. Gasflusssteuerungsvorrichtung nach Anspruch 10, wobei das Stellorgan-Steuerungsmittel die Membran so steuert, dass sie bei ihrer Resonanzfrequenz und/oder Oberwellen davon erregt ist.

12. Gasflusssteuerungsvorrichtung nach Anspruch 11, wobei die Stellorgan-Steuerungsmittel benachbarter Stellorgane (10) miteinander verbunden sind, um ihre jeweiligen Erregungswirkungen zu überlagern.

13. Gasflusssteuerungsvorrichtung nach einem der vorhergehenden Ansprüche, wobei mehrere Stellorgane (10) in einer Zeile oder einem Array angeordnet sind.

14. Gasflusssteuerungsvorrichtung nach Anspruch 13, wobei die Stellorgane in einem Array (40a) mit einer Anzahl Zeilen und Spalten von Stellorganen angeordnet sind, ein Satz erster Verbindungsleitungen (42), welche zu jeder Zeile von Stellorganen gehören, das piezokeramische Erregungsmittel (18) jedes Stellorgans in der Zeile verbinden und ein Satz zweiter Verbindungsleitungen (44), welche zu jeder Spalte gehören, jedes Stellorgan (10) in der Säule verbinden.

15. Gasflusssteuerungsvorrichtung nach Anspruch 13, wobei eine rechteckige kontinuierliche Membran (46) bereitgestellt wird und die Stellorgane (10) in einem Array mit einer Anzahl Zeilen und Spalten von Stellorganen auf der Membran angeordnet sind, wobei eine Anzahl piezokeramischer Erregungsmittel (18f) entlang der Ränder der rechteckigen Membran (46) angeordnet sind und wobei sich jedes in gerader Verlängerung einer der Zeilen oder Spalten befindet und individuell adressierbar ist.

16. Gasflusssteuerungsvorrichtung nach Anspruch 1, welche mindestens einen Strahlmesswandler ohne Netto-Massenstrom umfasst, wobei der Strahlmesswandler einen Hohlraum (58) mit einer Öffnung (56) umfasst, wobei das Stellorgan (50a) eine kreisförmige Membran (54) mit einer zentralen Öffnung (56) aufweist, welche den Hohlraum (58) abdeckt.

17. Gasflusssteuerungsvorrichtung nach Anspruch 16, welche Mittel zum Variieren der Kammergröße des Hohlraums (58) umfasst.

18. Gasflusssteuerungsvorrichtung nach einem der vorhergehenden Ansprüche, wobei die Oberfläche Teil einer Tragfläche ist.

19. Gasflusssteuerungsvorrichtung nach Anspruch 18, wobei die Tragfläche Teil eines Flugzeugflügels ist.

20. Gasflusssteuerungsvorrichtung nach Anspruch 19, wobei die Gasflusseigenschaft, welche gesteuert werden soll, der Grenzschichtübergang des Gasflusses ist.

21. Gasflusssteuerungsvorrichtung nach Anspruch 19, wobei die Gasflusseigenschaft, welche gesteuert werden soll, die Wirbelströmung ist.

## Revendications

1. Dispositif de contrôle de débit de gaz pour contrôler certaines caractéristiques de débit de gaz d'un débit de gaz le long d'une surface par des actionneurs piézocéramiques (10) pour un fonctionnement à haute fréquence dudit débit d'air dans lequel au moins un actionneur (10) est disposé dans une dite surface comprenant une membrane (12) et au moins un moyen (18) d'excitation piézocéramique pour exciter ladite membrane sur un bord de membrane, dans lequel ladite membrane (12) a une épaisseur variable qui est la plus épaisse près du bord (16) de membrane et la plus fine dans sa zone centrale (14) **caractérisé en ce que** l'épaisseur de ladite membrane de sa zone centrale (14) à son bord (16) augmente de façon exponentielle eu égard à la distance radiale.

2. Dispositif de contrôle de débit de gaz selon la revendication 1 dans lequel la face extérieure (22) de ladite membrane (12a) adjacente au dit débit de gaz est plane.

3. Dispositif de contrôle de débit de gaz selon la revendication 1 dans lequel chaque dit moyen d'excitation comprend deux dispositifs d'excitation piézocéramiques (18a, 18b) disposés sur les faces opposées de ladite membrane (12).

4. Dispositif de contrôle de débit de gaz selon la revendication 3 dans lequel au moins un desdits dispositifs (18) d'excitation comprend un moyen de détection pour détecter l'oscillation de la membrane.

5. Dispositif de contrôle de débit de gaz selon la revendication 1 dans lequel chaque dit actionneur (10) comprend une membrane circulaire (12).

6. Dispositif de contrôle de débit de gaz selon la revendication 5 dans lequel ledit actionneur comprend au moins un dispositif (18a, 18b) d'excitation piézocéramique en forme de couronne disposé sur le bord de la membrane (16).

7. Dispositif de contrôle de débit de gaz selon la revendication 5 dans lequel ladite membrane circulaire comprend un nombre de fentes radiales (30) divisant ladite membrane (12) en un nombre de rayons de membrane (32) en forme de secteur circulaire.

8. Dispositif de contrôle de débit de gaz selon la revendication 1 dans lequel ledit actionneur (10e) comprend une membrane rectangulaire (12e).

9. Dispositif de contrôle de débit de gaz selon la revendication 8 dans lequel ledit actionneur comprend deux moyens d'excitation (18e) longitudinaux disposés le long des bords opposés de ladite membrane (12e).

10. Dispositif de contrôle de débit de gaz selon une des revendications précédentes dans lequel chaque dit actionneur (10) comprend un moyen de contrôle d'actionneur individuel.

11. Dispositif de contrôle de débit de gaz selon la revendication 10 dans lequel ledit moyen de contrôle d'actionneur contrôle ladite membrane à exciter à sa fréquence de résonance et/ou les harmoniques de celle-ci.

12. Dispositif de contrôle de débit de gaz selon la revendication 11 dans lequel le moyen de contrôle d'actionneur des actionneurs voisins (10) sont interconnectés pour superposer leurs effets d'actionnement respectifs.

13. Dispositif de contrôle de débit de gaz selon une des revendications précédentes dans lequel une pluralité d'actionneurs (10) est disposée en rangée ou en ensemble.

14. Dispositif de contrôle de débit de gaz selon la revendication 13 dans lequel lesdits actionneurs sont disposés dans un ensemble (40a) avec un nombre de rangées et de colonnes d'actionneurs, un jeu de premières lignes de connexion (42) associé dont chaque rangée d'actionneurs connecte le moyen d'excitation piézocéramique (18) de chaque dit actionneur dans ladite rangée et un jeu de deuxièmes lignes de connexion (44) associé dont chaque colonne connecte chacun desdits actionneurs (10) dans ladite colonne.

15. Dispositif de contrôle de débit de gaz selon la revendication 13 dans lequel une membrane continue rectangulaire (46) est prévue et lesdits actionneurs (10) sont disposés dans un ensemble avec un nombre de rangées et de colonnes d'actionneurs sur ladite membrane, un nombre de moyens d'excitation piézocéramiques (18f) étant disposé le long des bords de ladite membrane rectangulaire (46) et chacun étant dans la ligne d'extension d'une desdites rangées ou colonnes et étant accessible de façon individuelle.

16. Dispositif de contrôle de débit de gaz selon la revendication 1 comprenant au moins un transducteur de jet de débit massique zéro, ledit transducteur de jet comprenant une cavité (58) avec un orifice (56), ledit actionneur (50a) ayant une membrane circulaire (54) avec une ouverture (56) centrale couvrant ladite cavité (58).

17. Dispositif de contrôle de débit de gaz selon la revendication 16 comprenant un moyen pour faire varier la taille de la chambre de ladite cavité (58).

18. Dispositif de contrôle de débit de gaz selon une des revendications précédentes dans lequel ladite surface est une partie d'une surface portante.

19. Dispositif de contrôle de débit de gaz selon la revendication 18 dans lequel ladite surface portante est une partie d'une aile d'aéronef.

20. Dispositif de contrôle de débit de gaz selon la revendication 19 dans lequel la caractéristique de débit de gaz à contrôler est la transition de la couche limite dudit débit de gaz.

21. Dispositif de contrôle de débit de gaz selon la revendication 19 dans lequel la caractéristique du débit de gaz à contrôler est le tourbillon de débit.
